# EUROPÄISCHE PATENTSCHRIFT

(11) **EP 4 219 304 B1**
(45) Veröffentlichungstag und Bekanntmachung des Hinweises auf die Patenterteilung: **02.04.2025**
(21) Anmeldenummer: 22153403.5
(22) Anmeldetag: 26.01.2022
(51) Int. Cl.: B64D 11/00, F16B 9/00, F16B 35/00, F16B 39/02

(54) **KOPPLUNGSVORRICHTUNG FÜR EINE VERBINDUNGSSTANGE**
COUPLING DEVICE FOR A CONNECTING ROD
DISPOSITIF D'ACCOUPLEMENT POUR UNE BIELLE DE LIAISON

(43) Veröffentlichungstag der Anmeldung: 02.08.2023
(73) Patentinhaber: Airbus Operations GmbH, 21129 Hamburg (DE)
(72) Erfinder: BENTHIEN, Hermann, 21129 Hamburg (DE); POPPE, Andreas, 21129 Hamburg (DE)
(74) Vertreter: LKGLOBAL Lorenz & Kopf Patentanwalt Attorney at Law PartG mbB

(56) Entgegenhaltungen:
- EP-A1- 3 266 706
- EP-A2- 0 861 781
- DE-A1- 102018 109 995
- US-A1- 2008 213 034

## Beschreibung

### Technisches Gebiet

Die vorliegende Beschreibung betrifft eine Kopplungsvorrichtung für eine Verbindungsstange zum Anbinden einer Komponente an einer Rumpfstruktur eines Flugzeugs und/oder zum Aussteifen der Rumpfstruktur, eine Rumpfstruktur eines Flugzeugs sowie ein Flugzeug mit einer derartigen Rumpfstruktur.

### Technischer Hintergrund

Zum Anbinden von Komponenten in einer Rumpfstruktur eines Flugzeugs, etwa von Über-Kopf-Staufächern, sind unterschiedlichste Vorrichtungen bekannt. Diese könnten Fachwerkstrukturen mit Fachwerkstäben umfassen, die an Spanten einer Rumpfstruktur befestigbar sind. Aufgrund von fertigungsbedingten Toleranzen ist dabei gewünscht, einen bestimmten Längenausgleich der Fachwerkstäbe bzw. ihrer Anbindung zu schaffen, sodass im Innern der Rumpfstruktur ein optisch harmonischer, geradliniger Einbau von Komponenten ermöglicht wird und Maßabweichungen der Rumpfstruktur dabei berücksichtigt werden.

DE 10 2017 131 150 A1 beschreibt ein Modulsystem zur Installation von Modulen an einer Rumpfstruktur eines Fahrzeugs. Das System umfasst mehrere Module mit daran angeordneten Haltern zum Befestigen an einer Rumpfstruktur, mehrere auf einer Fußbodenebene fahrbare Montagegestelle und mindestens ein zumindest bereichsweise flexibles Verbindungselement, das sich über sämtliche Module erstreckt und diese in einem an der Rumpfstruktur installierten Zustand miteinander koppelt.

DE 10 2018 109 995 A1 beschreibt ein Befestigungssystem, welches ein Befestigungselement und mindestens eine Befestigungsvorrichtung aufweist, die ein Flanschgehäuse, ein Verschlusselement, ein Hohlkugelelement und einen Kugeleinsatz aufweist. Das Hohlkugelelement ist um eine erste Schwenkachse gegenüber dem Flanschgehäuse schwenkbar, während der Kugeleinsatz um eine zweite Schwenkachse in dem Hohlkugelelement schwenkbar ist.

### Beschreibung

Es kann als Aufgabe betrachtet werden, eine alternative Kopplungsvorrichtung vorzuschlagen, die eine einfache, schnelle Montage und einen wirkungsvollen Toleranzausgleich schafft.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird eine Kopplungsvorrichtung für eine Verbindungsstange zum Anbinden einer Komponente an einer Rumpfstruktur eines Flugzeugs und/oder zum Aussteifen der Rumpfstruktur vorgeschlagen, die Kopplungsvorrichtung aufweisend ein erstes Kopplungselement, und ein mit dem ersten Kopplungselement koppelbares zweites Kopplungselement, wobei das erste Kopplungselement einen länglichen Körper aufweist, der auf einer Mantelfläche entlang einer ersten Längsachse eine erste Rillenstruktur aufweist, wobei das zweite Kopplungselement einen hohlzylindrischen Abschnitt aufweist, der auf einer Innenfläche entlang einer zweiten Längsachse eine mit der ersten Rillenstruktur komplementäre zweite Rillenstruktur aufweist, wobei der hohlzylindrische Abschnitt einen radialen Ausschnitt aufweist, durch den der längliche Körper in radialer Richtung von außerhalb des hohlzylindrischen Abschnitts in die zweite Rillenstruktur einbringbar ist, wobei das zweite Kopplungselement einen Verschlusskörper aufweist, der zum Schließen des radialen Ausschnitts ausgebildet ist, herausnehmbar in dem Ausschnitt positionierbar ist und an einer radial innenliegenden Fläche die zweite Rillenstruktur ergänzt, und wobei das zweite Kopplungselement ferner ein Sicherungselement aufweist, das auf den hohlzylindrischen Abschnitt schiebbar ist, um den Verschlusskörper an dem hohlzylindrischen Abschnitt zu sichern.

Die Vorrichtung ist demzufolge in der Lage, eine Verbindungsstange mit einer Rumpfstruktur eines Flugzeugs zu koppeln. Eines des ersten Kopplungselements und des zweiten Kopplungselements ist hierzu mit der Rumpfstruktur verbindbar. Das andere des ersten Kopplungselements und des zweiten Kopplungselements ist indes mit der Verbindungsstange verbindbar. Es kann sich anbieten, das zweite Kopplungselement mit der Verbindungsstange zu verbinden.

Die beiden Kopplungselemente sind dazu ausgelegt, rasch eine mechanische Verbindung miteinander herzustellen. Dabei können direkt beim Herstellen der Verbindung auch fertigungsbedingte Toleranzen kompensiert werden. Die Kopplungsvorrichtung kann zur Realisierung unterschiedlicher Festigkeitsgrade angepasst werden. Insbesondere sind auch hoch belastbare mechanische Verbindungen denkbar.

Das erste Kopplungselement weist einen länglichen Körper auf. Dieser könnte einen weitgehend konstanten Querschnitt umfassen, der entlang der ersten Längsachse eine Mantelfläche definiert. Auf dieser Mantelfläche ist eine erste Rillenstruktur angeordnet. Die erste Rillenstruktur könnte in Form von mehreren, voneinander getrennten und voneinander beanstandeten Rillen ausgeführt sein. Alternativ dazu wäre auch ein Gewinde denkbar, bei dem lediglich eine einzige, spiralförmig auf der Mantelfläche verlaufende Rille ausgebildet ist. Diese erste Rillenstruktur dient dazu, eine formschlüssige Verbindung mit dem zweiten Kopplungselement herzustellen und fungiert folglich als Mittel zum Einleiten einer Längskraft in das erste Kopplungselement.

Das zweite Kopplungselement weist einen hohlzylindrischen Abschnitt auf, dessen Hohlraum an den länglichen Körper angepasst ist. Dies bedeutet, dass der längliche Körper und der Hohlraum derart dimensioniert sind, dass der längliche Körper in den Hohlraum des hohlzylindrischen Abschnitts einbringbar ist. Die an der Innenfläche des hohlzylindrischen Abschnitts angeordnete zweite Rillenstruktur ist dabei komplementär zu der ersten Rillenstruktur ausgeführt. Die Rillen der zweiten Rillenstruktur sind folglich so angepasst, dass sie mit den Rillen der ersten Rillenstruktur korrespondieren. Ist der längliche Körper in dem hohlzylindrischen Abschnitt angeordnet, kämmen die erste und zweite Rillenstruktur miteinander. Die Axialposition des länglichen Körpers und damit des ersten Kopplungselements relativ zu dem zweiten Kopplungselement ist hierdurch festgelegt.

Die erste Rillenstruktur und die zweite Rillenstruktur sind so ausgebildet, dass eine Selbsthemmung erreicht ist, sodass eine axiale Bewegung der ersten Rillenstruktur gegenüber der zweiten Rillenstruktur vermieden wird. Sind die Rillenstrukturen als Innen- bzw. Außengewinde ausgeführt, ist die Gewindesteigung zum Herstellen der Selbsthemmung entsprechend auszuwählen. Sind die Rillenstrukturen so ausgebildet, dass sie voneinander separate, beanstandete Rillen aufweisen, sind die Rillen bei ausreichender Höhe hierfür nicht besonders auszubilden.

Ein besonderer Vorteil der erfindungsgemäßen Kupplungsvorrichtung liegt darin, dass der hohlzylindrische Abschnitt den radialen Ausschnitt aufweist. Dieser ist so dimensioniert, dass der längliche Körper in Radialrichtung, d.h. quer zu der ersten bzw. zweiten Längsachse, von außen in den hohen zylindrischen Abschnitt einbringbar ist. Folglich kann das erste Kopplungselement bereits mit einer Rumpfstruktur des Flugzeugs verbunden sein, während eine Verbindungsstange mit daran angeordnetem zweiten Kupplungselement mit einer anderen Komponente verbunden sein kann. Durch Positionieren der Verbindungsstange an dem ersten Kopplungselement kann das Einbringen des länglichen Körpers in den hohlzylindrischen Abschnitt erreicht werden.

Um ein Verlassen des hohlzylindrischen Abschnitts zu verhindern, ist der Verschlusskörper vorgesehen. Dieser ist ausgebildet, den radialen Ausschnitt zumindest teilweise zu schließen und, im geschlossenen Zustand, die zweite Rillenstruktur zu ergänzen. Zum Verbinden der beiden Kopplungselemente miteinander wird folglich der Verschlusskörper entfernt und anschließend, wenn der längliche Körper in dem hohlzylindrischen Abschnitt liegt, wieder entsprechend positioniert. Das erste Kopplungselement und das zweite Kopplungselement sind dann in einer gewünschten, Maßabweichungen kompensierenden, relativen Axialposition angeordnet. Um ein Austreten des Verschlusskörpers zu vermeiden, ist das Sicherungselement vorgesehen. Dieses kann auf den hohlzylindrischen Abschnitt geschoben werden, um den Verschlusskörper daran zu halten. Der Verschlusskörper umgibt dabei bevorzugt den hohlzylindrischen Abschnitt vollständig und bündig, sodass eine Bewegung des Verschlusskörpers ausgeschlossen wird.

Die erfindungsgemäße Kopplungsvorrichtung erlaubt folglich ein schnelles Verbinden zweier Kopplungselemente und damit einer Verbindungsstange mit einer Rumpfstruktur eines Flugzeugs, bei gleichzeitig automatischer Toleranzkompensation. Eine solche Kopplungsvorrichtung kann zudem ebenso leicht wieder gelöst werden, indem das Sicherungselement von dem hohlzylindrischen Abschnitt entfernt wird, um den Verschlusskörper zu entnehmen und die Kopplungselemente wieder voneinander zu trennen.

In einer vorteilhaften Ausführungsform weist die erste Rillenstruktur ein Außengewinde auf, und die zweite Rillenstruktur weist ein Innengewinde auf. Die erste Rillenstruktur und die zweite Rillenstruktur können für beliebige Belastungsszenarien einfach mit gängigen Werkzeugen hergestellt werden. Zudem kann bei geschlossenem Sicherungselement durch Rotation des ersten Kopplungselements eine Verstellung oder Vorspannung durchgeführt werden, falls erforderlich. Beim Verwenden von herkömmlichen Gewinden kann eine stufenlose Einstellbarkeit der Länge der Kombination aus Verbindungsstange und Kopplungsvorrichtung erreicht werden.

In einer vorteilhaften Ausführungsform kann die erste Rillenstruktur eine Anordnung von mehreren, voneinander beabstandeten, parallelen, umlaufenden Rillen aufweisen, wobei die zweite Rillenstruktur eine Anordnung von mehreren, voneinander beabstandeten, parallelen, umlaufenden Nuten aufweist. Die mehreren Rillen und Nuten erlauben eine Einstellbarkeit in einem bestimmten Raster. Unterschiedliche Nuttiefen und Rillenhöhen sowie Querschnittsformen der Rillen und Nuten können auf den Anwendungsfall abgestimmt werden.

In einer vorteilhaften Ausführungsform umfasst das Sicherungselement eine Hülse, die auf dem zweiten Kopplungselement axial verschiebbar gelagert ist. Ein Innendurchmesser der Hülse entspricht dabei dem Außendurchmesser des hohlzylindrischen Abschnitts. Der Verschlusskörper schließt in radialer Richtung bevorzugt bündig mit dem hohlzylindrischen Abschnitt ab. Die Hülse lässt sich folglich einfach über einen Bereich schieben, in dem der Verschlusskörper in der radialen Nut angeordnet ist. Durch das Aufschieben der Hülse in diesen Bereich wird der Verschlusskörper vor dem Austreten aus dem radialen Ausschnitt gehindert.

In einer vorteilhaften Ausführungsform umfasst das Sicherungselement eine Druckfeder, die die Hülse über den Verschlusskörper drängt. Die Druckfeder führt dazu, dass die Hülse stets auf den Verschlusskörper gedrängt wird und folglich die Kopplungsvorrichtung stets bestrebt ist, eine geschlossene Position einzunehmen. Zum Öffnen und Schließen, d.h. zum Entnehmen und Einsetzen des Verschlusskörpers, wird das Sicherungselement gegen den Druck der Druckfeder von der radialen Nut weg verschoben und kann dort zumindest temporär fixiert werden. Es ist vorstellbar, dass hierzu der hohlzylindrische Abschnitt eine Ausnehmung, eine Nut oder dergleichen aufweist, in die ein temporäres Sicherungsmittel einbringbar ist, beispielsweise ein Stift oder ähnliches. Zum Schließen der Kopplungsvorrichtung kann das Sicherungsmittel wieder entfernt werden. Alternativ ist auch vorstellbar, dass die Druckfeder lediglich eine eher geringe Kraft auf die Hülse ausübt, sodass ein Benutzer sehr leicht mit einer Hand die Hülse von dem radialen Ausschnitt weg schieben kann, um den Verschlusskörper einzubringen und anschließend die Hülse wieder loslassen zu können.

In einer vorteilhaften Ausführungsform weist die Kopplungsvorrichtung ferner ein an dem zweiten Kopplungselement anbringbares Anschlagelement auf, das dazu ausgebildet ist, mit dem Sicherungselement in einer Sicherungsposition in Anschlag zu geraten. Das Anschlagelement verhindert, dass die Hülse über den hohlzylindrischen Abschnitt hinaus verschoben wird, wodurch die Kopplungsvorrichtung wieder geöffnet werden könnte. Das Anschlagelement könnte sowohl als Sicherungsring, als ein Stift oder ähnliches ausgeführt sein.

In einer vorteilhaften Ausführungsform ist der Verschlusskörper in radialer und/oder axialer Richtung formschlüssig in den radialen Ausschnitt steckbar. Radial könnte der Verschlusskörper völlig unabhängig von dem zweiten Kopplungselement ausgeführt sein. Er kann in radialer Richtung an den radialen Ausschnitt gebracht und dort eingesetzt werden. In axialer Richtung könnte er beispielsweise einsteckbar sein, wobei er im Wesentlichen in axialer Richtung bewegt wird. Mischformen sind denkbar. Er kann zudem auch an dem länglichen Körper fixiert sein, sodass beim Einsetzen des länglichen Körpers in den hohlzylindrischen Abschnitt unmittelbar der Verschlusskörper in dem radialen Ausschnitt angeordnet ist.

In einer vorteilhaften Ausführungsform umfasst der Verschlusskörper einen Ringabschnitt, der auf den länglichen Körper aufsteckbar ist, wobei der Ringabschnitt einen Durchmesser aufweist, der einen Durchmesser des länglichen Körpers übersteigt, sodass zumindest ein von dem Ringabschnitt abgewandtes Ende des Verschlusskörpers in radialer Richtung zu dem länglichen Körper bewegbar ist oder sodass der Verschlusskörper um den länglichen Körper drehbar ist. Durch den Ringabschnitt ist der Verschlusskörper unverlierbar an dem länglichen Körper angeordnet. Durch eine radial etwas lockerere Halterung durch den Ringabschnitt kann der Verschlusskörper leicht gegenüber der ersten Längsachse gekippt werden, sodass er schräg radial in den radialen Ausschnitt herein gekippt bzw. bewegt wird. Sollte der Verschlusskörper durch den Ringabschnitt drehbar an dem länglichen Körper sein, kann der Verschlusskörper axial fest an dem länglichen Körper angeordnet bleiben und beim Einstecken des länglichen Körpers direkt in den radialen Ausschnitt positioniert werden. Durch die Drehbarkeit kann ein Verkanten verhindert werden. Durch einen solchen Ringabschnitt kann die Kopplungsvorrichtung besonders einfach gehandhabt werden.

In einer vorteilhaften Ausführungsform erstreckt sich der Ausschnitt über ein Segment oder einen Sektor des hohlzylindrischen Abschnitts. Folglich könnte entlang der gesamten Länge des hohlzylindrischen Abschnitts ein Teil des Umfangs fehlen, der durch den Verschlusskörper ausfüllbar ist.

In einer vorteilhaften Ausführungsform weist der radiale Ausschnitt eine erste Verzahnung auf, wobei der Verschlusskörper eine zweite Verzahnung aufweist, die mit der ersten Verzahnung komplementär ist, und wobei Zähne der ersten Verzahnung und der zweiten Verzahnung entlang der ersten bzw. zweiten Längsachse voneinander beabstandet sind. Die Verzahnung könnte jeweils in eine Umfangsrichtung weisen, sodass der Verschlusskörper in einer eindeutigen, vorgegebenen Position an dem radialen Ausschnitt anbringbar ist. Es ist günstig, den holzylindrischen Abschnitt bei der Fertigung zu teilen, anschließend wieder zusammenzusetzen und erst dann die Rillenstruktur anzufertigen. Besonders bevorzugt ist der Verschlusskörper so ausgeführt, dass er ausschließlich in einer einzigen Ausrichtung an dem hohlzylindrischen Abschnitt anbringbar ist und eine Fehlpositionierung durch die Verzahnungen ausgeschlossen wird. Hierzu könnten die Verzahnungen jeweils an zwei einander entgegengesetzten Seiten des hohlzylindrischen Abschnitts bzw. des Verschlusskörpers unterschiedlich ausgeführt sein, sodass der Verschlusskörper in nur einer Ausrichtung daran positionierbar ist.

In einer vorteilhaften Ausführungsform weist der hohlzylindrische Abschnitt eine radiale Sichtbohrung auf, die in einem vorbestimmten Abstand zu einem stirnseitigen Ende des zweiten Kopplungselements angeordnet ist, um eine Mindesteinstecktiefe des länglichen Körpers im montierten Zustand der Kopplungsvorrichtung zu prüfen. Die radiale Sichtbohrung erlaubt, von außen in den Hohlraum des zweiten Kopplungselements zu sehen. Ist die radiale Bohrung entsprechend platziert, kann geprüft werden, ob der längliche Körper ausreichend in den Hohlraum hineinragt. Ist er von außen etwa nicht sichtbar, ist die Mindesteinstecktiefe unterschritten.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine Explosionsdarstellung einer Kopplungsvorrichtung gemäß einem ersten Ausführungsbeispiel.
- Fig. 2: eine dreidimensionale Darstellung der Kopplungsvorrichtung gemäß dem ersten Ausführungsbeispiel.
- Fig. 3: eine Abfolge von Montageschritten in mehreren Seitenansichten mit der Kopplungsvorrichtung gemäß dem ersten Ausführungsbeispiel.
- Fig. 4: eine Explosionsdarstellung einer Kopplungsvorrichtung gemäß einem zweiten Ausführungsbeispiel.
- Fig. 5a-5b: zwei dreidimensionale Darstellung der Kopplungsvorrichtung gemäß dem zweiten Ausführungsbeispiel.
- Fig. 6: eine Abfolge von Montageschritten in mehreren Seitenansichten mit der Kopplungsvorrichtung gemäß dem zweiten Ausführungsbeispiel.

### Detaillierte Beschreibung von Ausführungsbeispielen

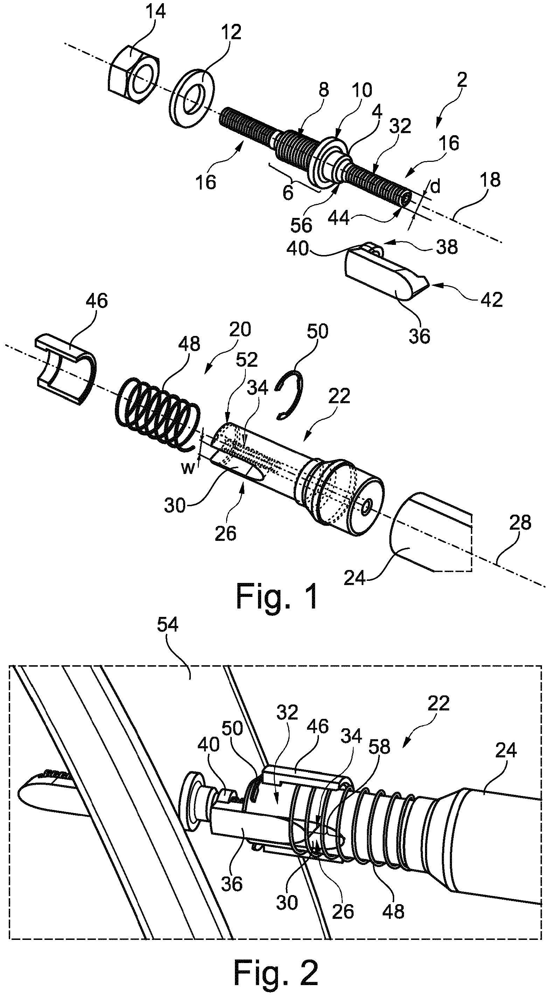

Fig. 1 zeigt ein erstes Ausführungsbeispiel einer Kopplungsvorrichtung 2 in einer Explosionsdarstellung. Die Kopplungsvorrichtung 2 weist ein erstes Kopplungselement 4 auf, das als Stehbolzen ausgeführt ist. Ein Bolzenabschnitt 6 mit einem Bolzengewinde 8 und einem umlaufenden Kragen 10 wird in eine Öffnung einer hier nicht dargestellten Rumpfstruktur eingeschraubt und mit einer Unterlegscheibe 12 und einer Mutter 14 gesichert. Zu beiden Seiten des Bolzenabschnitts 6 schließt sich ein länglicher Körper 16 an. Das erste Kopplungselement 4 ist folglich in der Lage, beidseitig entlang einer ersten Längsachse 18 eine Kopplung mit einem zweiten Kopplungselement 20 durchzuführen.

Das zweite Kopplungselement 20 weist einen hohlzylindrischen Abschnitt 22 auf, der an einer Verbindungsstange 24 befestigbar ist. Der hohlzylindrische Abschnitt 22 weist einen radialen Ausschnitt 26 mit eine Breite w auf, die einen Durchmesser d des länglichen Körpers 16 übersteigt. Der längliche Körper 16 kann folglich von einer radialen Seite aus, d.h. quer zu einer zweiten Längsachse 28, durch den radialen Ausschnitt 26 in einen darin befindlichen Hohlraum 30 eingebracht werden.

Der längliche Körper 16 weist eine erste Rillenstruktur 32 auf einer Umfangsfläche auf, die mit einer zweiten Rillenstruktur 34 in dem Hohlraum 30 korrespondiert bzw. dazu komplementär ist. Der längliche Körper 16 ist so dimensioniert, dass er vollständig in den Hohlraum 30 einbringbar ist und die erste Rillenstruktur 32 mit der zweiten Rillenstruktur 34 kämmt. Dadurch kann eine Verbindung entlang der Längsachsen 18 bzw. 28 geschaffen werden. Um zu verhindern, dass der längliche Körper 16 wieder aus dem Innenraum 30 austritt, ist ein Verschlusskörper 36 vorgesehen. Dieser wird in den radialen Ausschnitt 26 gesteckt, wobei dieser im eingesteckten Zustand mit einer Oberfläche des hohlzylindrischen Abschnitts 22 bündig abschließt.

Der Verschlusskörper 36 umfasst einen Ringabschnitt 38, der eine Öffnung 40 umfasst, die auf den länglichen Körper 16 aufschiebbar ist. An einer dem Ringabschnitt 38 abgewandten Seite des Verschlusskörpers 36 ist ein radialer Vorsprung 42 vorgesehen, der quer zu der ersten Längsachse 18 vor die Stirnfläche 44 des länglichen Körpers 16 ragt. Es kann vorgesehen sein, dass der Verschlusskörper 36 quer zu den ersten Längsachse 18 verkipp- bzw. bewegbar ist.

Alternativ dazu kann bereits beim Einstecken des länglichen Körpers 16 der Vorsprung 42 vor der Stirnfläche 44 angeordnet sein und in unterschiedlichen Positionen radial bündig mit dem hohlzylindrischen Abschnitt 22 abschließen. Dies bedeutet, dass der längliche Körper 16 einfach in den radialen Ausschnitt 22 eingesteckt wird, während ein Teil des radialen Ausschnitts 26 bereits vollständig geschlossen wird. In anderen Varianten könnte der Verschlusskörper 36 axial noch etwas bewegbar sein, um den radialen Ausschnitt 26 vollständig zu schließen.

Um zu verhindern, dass der Verschlusskörper 36 aus dem radialen Ausschnitt 26 gerät, ist ein Sicherungselement 46 vorgesehen, welches hier als eine Hülse ausgeführt ist. In Fig. 1 ist das Sicherungselement bzw. die Hülse 46 teilgeschnitten, um ihre Funktion zu verdeutlichen. Über eine Druckfeder 48 kann die Hülse 46 in eine Position gedrängt werden, die stets über dem Verschlusskörper 36 liegt, der in dem radialen Ausschnitt 26 angeordnet ist. Ein Anschlagelement 50 in Form eines Sicherungsrings ist an dem zweiten Kopplungselement 22 in einer entsprechenden, umlaufenden, stirnseitigen Nut 52 anbringbar, sodass das Sicherungselement 46 nicht über den Verschlusskörper 36 hinaus gedrängt wird.

Zum Koppeln des ersten Kopplungselements 4 mit dem zweiten Kopplungselement 22 wird folglich die Hülse 46 entlang der zweiten Längsachse 28 von dem radialen Ausschnitt 26 wegbewegt, das erste Kupplungselement 4 das zweite Kopplungselement 22 zusammengesteckt, um anschließend die Hülse 46 in Richtung der Nut 52 zu bewegen und den Verschlusskörper 36 in dem radialen Ausschnitt 26 einzuschließen. Die beiden Kopplungselemente 4 und 20 sind dann miteinander verbunden.

In Fig. 2 wird dies in einer dreidimensionalen Darstellung in zusammengesetztem Zustand an einer Rumpfstruktur 54 gezeigt. Hier ist die Verbindungsstange 24 mit dem zweiten Kopplungselement 22 verbunden. Die Hülse 46 befindet sich über dem radialen Ausschnitt 26, wobei der längliche Körper 16 in dem Hohlraum 30 angeordnet ist, sodass die erste Rillenstruktur 32 mit der zweiten Rillenstruktur 34 kämmt. Der Verschlusskörper 36 befindet sich in dem radialen Ausschnitt 26, wobei der Ringabschnitt 40 auf einem Abschnitt 56 des ersten Kopplungselements 4 angeordnet ist. In einer Richtung entlang der ersten Längsachse 18 ist er an dem länglichen Körper 16 fixiert, sodass er in Fig. 2 beispielhaft eine Lücke 58 in dem radialen Ausschnitt 26 lässt. Da das Sicherungselement 46 den hohlzylindrischen Abschnitt 22 und den Verschlusskörper 36 umschließt, wird der längliche Körper 16 in dem hohlzylindrischen Abschnitt 22 festgehalten. Das erste Kopplungselement 4 kann an der Rumpfstruktur 54 fest montiert sein, wobei anschließend die mit einer hier nicht gezeigten Komponente verbundene Verbindungsstange 24 mit dem zweiten Kopplungselement 20 ausgestattet an dem ersten Kopplungselement 4 angebunden werden kann. Die Einstecktiefe des länglichen Körpers 16 ist von der Maßtoleranz der Rumpfstruktur 54 und der Positionierung der hier nicht gezeigten Komponente abhängig. Es wird sehr rasch eine Toleranzkompensation ermöglicht, wobei die Montage lediglich das Zusammenstecken der beiden Komponenten 4 und 22 erfordert, sowie das anschließende Betätigen der Hülse 46.

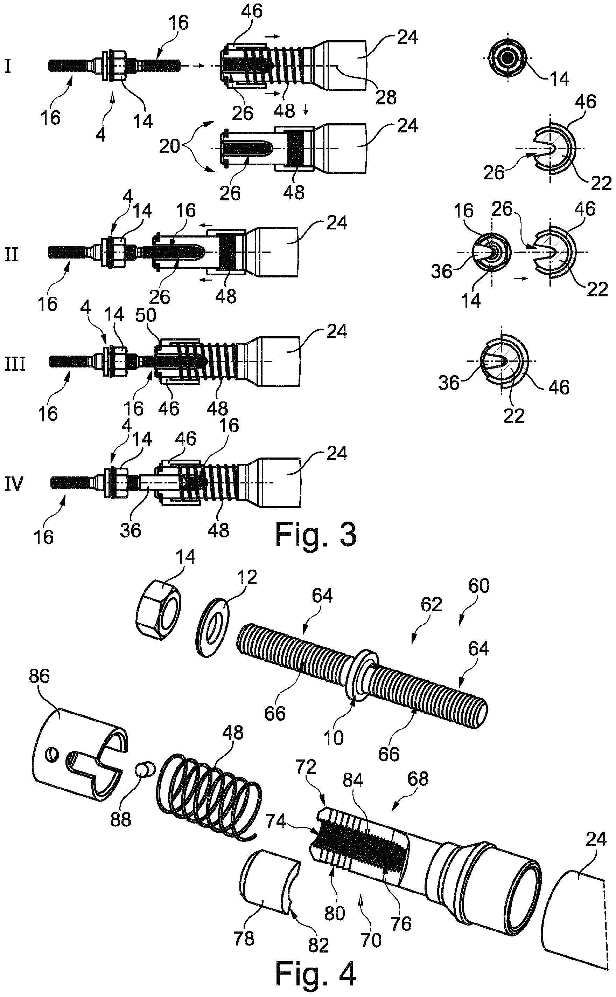

Fig. 3 zeigt eine Abfolge der Montage in mehreren, aufeinanderfolgenden Darstellungen. In I sind das erste Kopplungselement 4 und das zweite Kopplungselement 20 voneinander getrennt. Zum Einführen des länglichen Körpers 16 wird die Hülse 46 entlang der zweiten Längsachse 28 in der Zeichnungsebene nach rechts verschoben. In II ist der längliche Körper 16 in dem radialen Ausschnitt 26 platziert. In III wird die Hülse 46 wieder in die entgegengesetzte Richtung verschoben und durch die Druckfeder 48 dort in Anschlag mit dem Anschlagelement 50 gehalten. In IV wird der Verschlusskörper 36 in dem radialen Ausschnitt 26 gezeigt.

Fig. 4 zeigt ein weiteres Ausführungsbeispiel einer Kopplungsvorrichtung 60. Ein erstes Kopplungselement 62 ist ebenso als ein Stehbolzen ausgeführt, jedoch etwas einfacher gestaltet als in der Darstellung aus Fig. 1. Hier sind zwei längliche Körper 64 vorgesehen, die einen Kragen 10 einschließen. Beide länglichen Körper 64 sind mit einer ersten Rillenstruktur in Form eines ersten Gewindes 66 ausgestattet, die als Außengewinde ausgeführt sind, wobei ihre Drehrichtungen relativ zu dem Kragen 10 spiegelverkehrt sind. Das erste Kopplungselement 62 kann mit einer Unterlegscheibe 12 und einer Mutter 14 an der Rumpfstruktur 54 befestigt sein.

Ein zweites Kopplungselement 68 ist vorgesehen, das ebenfalls mit der Verbindungsstange 24 verbindbar ist. Hier ist ein hohlzylindrischer Abschnitt 70 vorgesehen, der einen radialen Ausschnitt 72 umfasst, der sich über mindestens 50% einer Umfangsfläche erstreckt. In einem Innenraum 74 ist eine zweite Rillenstruktur in Form eines zweiten Gewindes 76 angeordnet, das als Innengewinde ausgeführt ist und mit dem ersten Gewinde 66 komplementär ist. Der längliche Körper 64 kann folglich in den Innenraum 74 eingelegt werden, sodass die Gewindegänge des ersten Gewindes 66 und des zweiten Gewindes 76 kämmen. Sollten beim Zusammenstecken des ersten Kopplungselements 62 und des zweiten Kopplungselements 68 die Gewindegänge aufgrund der momentanen Ausrichtung entlang der Längsachsen 18 und 28 nicht passen, kann das zweite Kopplungselement 68 um einen gewissen Winkel gedreht werden, bis die Gewindegänge kämmen.

Ein Verschlusskörper 78 ist vorgesehen, der dazu ausgebildet ist, zumindest einen axialen Teil des radialen Ausschnitts 72 zu verschließen. Dieser ergänzt die unterbrochene Mantelfläche und ist in eine erste Verzahnung 80, die in dem radialen Ausschnitt 72 angeordnet ist, einbringbar. Hierzu ist eine zweite Verzahnung 82 vorgesehen, die in Umfangsrichtung gewandt ist. Hierdurch kann eine axiale Ausrichtung des Verschlusskörpers 78 an dem radialen Ausschnitt 72 erreicht werden.

Eine Sichtbohrung 84 ist vorgesehen, um von außen eine Einstecktiefe des länglichen Körpers 64 zu prüfen. Ist der längliche Körper 64 in der Sichtbohrung 84 nicht zu sehen, ist eine erforderliche Einstecktiefe unterschritten.

Ein Sicherungselement 86, das ebenfalls als eine Hülse ausgeführt ist, wird mittels der Druckfeder 48 über den hohlzylindrischen Abschnitt 70 geschoben. Als Anschlagmittel dient ein Stift 88, der entsprechend an dem hohlzylindrischen Abschnitt 70 positionierbar ist.

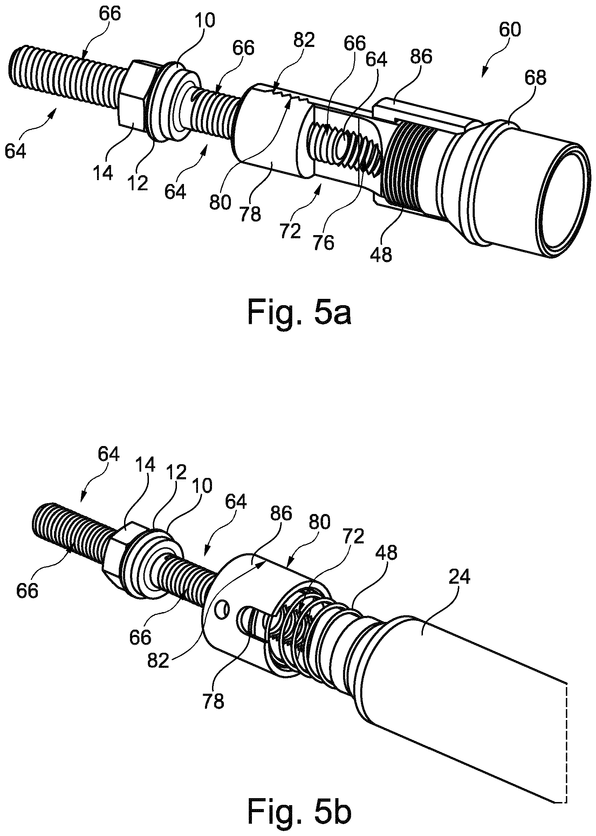

In Fig. 5a und 5b wird die Kopplungsvorrichtung 60 in einem zusammengesetzten Zustand dargestellt. Aus Gründen der Übersichtlichkeit wird die Rumpfstruktur 54 hier nicht gezeigt. In Fig. 5a ist der längliche Körper 64 in dem Innenraum 74 positioniert und überdeckt dabei die Sichtbohrung 84. Der Verschlusskörper 78 liegt bündig auf den radialen Ausschnitt 72, sodass die Verzahnungen 80 und 82 miteinander kämen. Das Sicherungselement 86 ist hier gegen die Federkraft der Druckfeder 48 zurückgeschoben, sodass der Verschlusskörper 78 entnehmbar ist. In Fig. 5b ist das Sicherungselement 86 mit der Druckfeder 48 in die geschlossene Position verschoben.

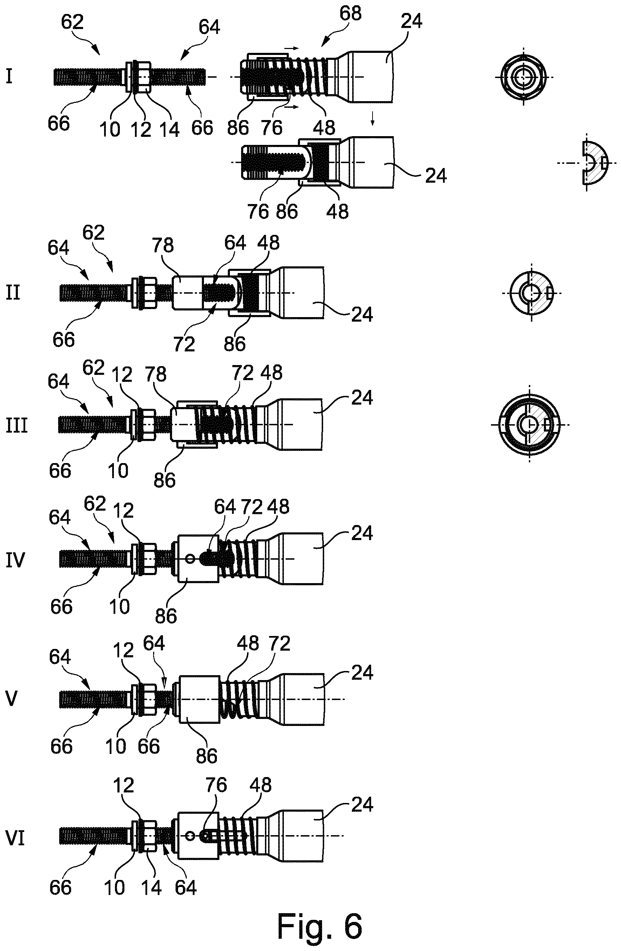

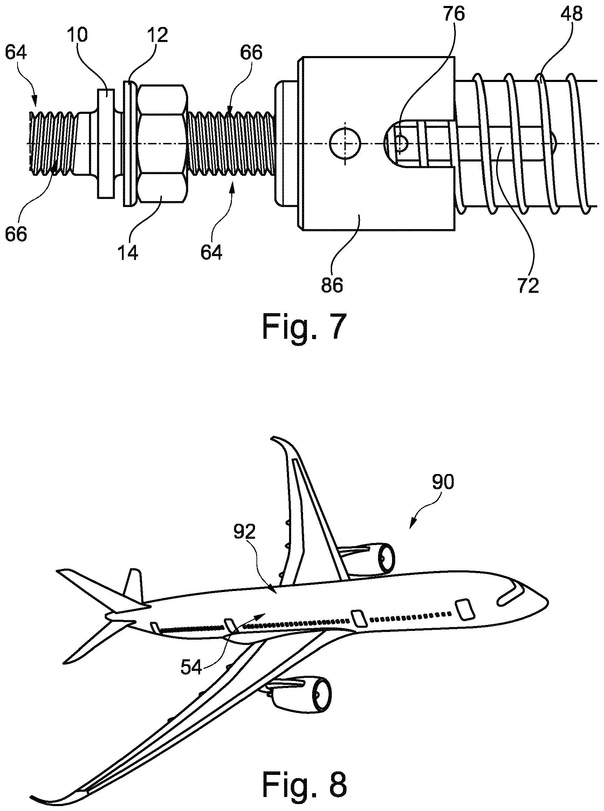

Fig. 6 zeigt eine Abfolge der Montage, analog zu der Darstellung in Fig. 3. In I ist der längliche Körper 64 von dem zweiten Kopplungselement 68 getrennt. Zum Montieren wird zunächst die Hülse 86 entlang der zweiten Längsachse 28 zurückgeschoben. Anschließend wird, wie in II dargestellt, der längliche Körper 64 in den radialen Ausschnitt 72 eingebracht und der radiale Ausschnitt 72 wird durch den Verschlusskörper 78 geschlossen. Anschließend wird, wie in III dargestellt, die Hülse 86 wieder zurückgeschoben, sodass der Verschlusskörper 78 gehalten wird. In den weiteren Darstellungen IV, V und VI sind unterschiedliche Ansichten gezeigt. In VI ist die Sichtbohrung 76 zu erkennen. Diese ist in dem gezeigten Fall durch den länglichen Körper 64 überdeckt und weist darauf hin, dass eine notwendige Einstecktiefe erreicht ist. In Fig. 7 ist dies in vergrößerter Form weiter verdeutlicht.

Fig. 8 zeigt schließlich ein Flugzeug 90, das einen Flugzeugrumpf 92 umfasst, in dem eine Rumpfstruktur 94 angeordnet ist. An dieser kann eine Verbindungsstange 24 über die Kopplungsvorrichtung 2 oder 60 befestigt werden. Ergänzend ist darauf hinzuweisen, dass "umfassend" oder "aufweisend" keine anderen Elemente oder Schritte ausschließt und "eine" oder "ein" keine Vielzahl ausschließt. Bezugszeichen in den Ansprüchen sind nicht als Einschränkung anzusehen.

### Bezugszeichenliste

- 2: Kopplungsvorrichtung
- 4: erstes Kopplungselement
- 6: Bolzenabschnitt
- 8: Bolzengewinde
- 10: umlaufender Kragen
- 12: Unterlegscheibe
- 14: Mutter
- 16: länglicher Körper
- 18: erste Längsachse
- 20: zweites Kopplungselement
- 22: hohlzylindrischer Abschnitt
- 24: Verbindungsstange
- 26: radialer Ausschnitt
- 28: zweite Längsachse
- 30: Hohlraum
- 32: erste Rillenstruktur
- 34: zweite Rillenstruktur
- 36: Verschlusskörper
- 38: Ringabschnitt
- 40: Öffnung
- 42: radialer Vorsprung
- 44: Stirnfläche
- 46: Sicherungselement / Hülse
- 48: Druckfeder
- 50: Anschlagelement / Sicherungsring
- 52: Nut
- 54: Rumpfstruktur
- 56: Abschnitt
- 58: Lücke
- 60: Kopplungsvorrichtung
- 62: erstes Kopplungselement
- 64: länglicher Körper
- 66: erstes Gewinde / Außengewinde / erste Rillenstruktur
- 68: zweites Kopplungselement
- 70: hohlzylindrischer Abschnitt
- 72: radialer Ausschnitt
- 74: Innenraum
- 76: zweites Gewinde / Innengewinde / zweite Rillenstruktur
- 78: Verschlusskörper
- 80: erste Verzahnung
- 82: zweite Verzahnung
- 84: Sichtbohrung
- 86: Sicherungselement / Hülse
- 88: Stift / Anschlagelement
- 90: Flugzeug
- 92: Flugzeugrumpf
- 94: Rumpfstruktur

- w: Breite
- d: Durchmesser

## Patentansprüche

1. Kopplungsvorrichtung (2, 60) für eine Verbindungsstange (24) zum Anbinden einer Komponente an einer Rumpfstruktur (54) eines Flugzeugs (90) und/oder zum Aussteifen der Rumpfstruktur (54), die Kopplungsvorrichtung (2, 60) aufweisend:
ein erstes Kopplungselement (4, 62), und
ein mit dem ersten Kopplungselement (4, 62) koppelbares zweites Kopplungselement (20, 68),
wobei das erste Kopplungselement (4, 62) einen länglichen Körper (16, 64) aufweist, der auf einer Mantelfläche entlang einer ersten Längsachse (18) eine erste Rillenstruktur (32, 66) aufweist,
wobei das zweite Kopplungselement (20, 68) einen hohlzylindrischen Abschnitt (22, 70) aufweist, der auf einer Innenfläche entlang einer zweiten Längsachse (28) eine mit der ersten Rillenstruktur (32, 66) komplementäre zweite Rillenstruktur (34, 76) aufweist,
wobei der hohlzylindrische Abschnitt (22, 70) einen radialen Ausschnitt (26, 72) aufweist, durch den der längliche Körper (16, 64) in radialer Richtung von außerhalb des hohlzylindrischen Abschnitts (22, 70) in die zweite Rillenstruktur (34, 76) einbringbar ist,
wobei das zweite Kopplungselement (20, 68) einen Verschlusskörper (36, 78) aufweist, der zum Schließen des radialen Ausschnitts (26, 72) ausgebildet ist, herausnehmbar in dem Ausschnitt (26, 72) positionierbar ist und an einer radial innenliegenden Fläche die zweite Rillenstruktur (34, 76) ergänzt, und
wobei das zweite Kopplungselement (20, 68) ferner ein Sicherungselement (46, 86) aufweist, das auf den hohlzylindrischen Abschnitt (22, 70) schiebbar ist, um den Verschlusskörper (36, 78) an dem hohlzylindrischen Abschnitt (22, 70) zu sichern.

2. Kopplungsvorrichtung (2, 60) nach Anspruch 1,
wobei die erste Rillenstruktur (32, 66) ein Außengewinde (66) aufweist, und
wobei die zweite Rillenstruktur (34, 76) ein Innengewinde (76) aufweist.

3. Kopplungsvorrichtung (2, 60) nach Anspruch 1,
wobei die erste Rillenstruktur (32, 66) eine Anordnung von mehreren, voneinander beabstandeten, parallelen, umlaufenden Rillen aufweist, und
wobei die zweite Rillenstruktur (34, 76) eine Anordnung von mehreren, voneinander beabstandeten, parallelen, umlaufenden Nuten aufweist.

4. Kopplungsvorrichtung (2, 60) nach einem der vorhergehenden Ansprüche,
wobei das Sicherungselement (46, 86) eine Hülse umfasst, die auf dem zweiten Kopplungselement (20, 68) axial verschiebbar gelagert ist.

5. Kopplungsvorrichtung (2, 60) nach Anspruch 4,
wobei das Sicherungselement (46, 86) eine Druckfeder (48) umfasst, die die Hülse über den Verschlusskörper (36, 78) drängt.

6. Kopplungsvorrichtung (2, 60) nach Anspruch 4 oder 5,
ferner aufweisend ein an dem zweiten Kopplungselement (20, 68) anbringbares Anschlagelement (50, 88), das dazu ausgebildet ist, mit dem Sicherungselement (46, 86) in einer Sicherungsposition in Anschlag zu geraten.

7. Kopplungsvorrichtung (2, 60) nach einem der vorhergehenden Ansprüche,
wobei der Verschlusskörper (36, 78) in radialer und/oder axialer Richtung formschlüssig in den radialen Ausschnitt (26, 72) steckbar ist.

8. Kopplungsvorrichtung (2, 60) nach einem der vorhergehenden Ansprüche,
wobei der Verschlusskörper (36, 78) einen Ringabschnitt (38) umfasst, der auf den länglichen Körper (16, 64) aufsteckbar ist, und
wobei der Ringabschnitt (38) einen Durchmesser aufweist, der einen Durchmesser (d) des länglichen Körpers (16, 64) übersteigt, sodass zumindest ein von dem Ringabschnitt (38) abgewandtes Ende des Verschlusskörpers (36, 78) in radialer Richtung zu dem länglichen Körper (16, 64) bewegbar ist oder sodass der Verschlusskörper (36, 78) um den länglichen Körper (16, 64) drehbar ist.

9. Kopplungsvorrichtung (2, 60) nach einem der vorhergehenden Ansprüche,
wobei sich der Ausschnitt (26, 72) über ein Segment oder einen Sektor des hohlzylindrischen Abschnitts (22, 70) erstreckt.

10. Kopplungsvorrichtung (2, 60) nach einem der vorhergehenden Ansprüche,
wobei der radiale Ausschnitt (26, 72) eine erste Verzahnung (80) aufweist,
wobei der Verschlusskörper (36, 78) eine zweite Verzahnung (82) aufweist, die mit der ersten Verzahnung (80) komplementär ist, und
wobei Zähne der ersten Verzahnung (80) und der zweiten Verzahnung (82) entlang der ersten Längsachse (18) bzw. zweiten Längsachse (28) voneinander beabstandet sind.

11. Kopplungsvorrichtung (2, 60) nach einem der vorhergehenden Ansprüche,
wobei der hohlzylindrische Abschnitt (22, 70) eine radiale Sichtbohrung (84) aufweist, die in einem vorbestimmten Abstand zu einem stirnseitigen Ende des zweiten Kopplungselements (20, 68) angeordnet ist, um eine Mindesteinstecktiefe des länglichen Körpers (16, 64) im montierten Zustand der Kopplungsvorrichtung zu prüfen.

## Claims

1. Coupling device (2, 60) for a connecting rod (24) for attaching a component to a fuselage structure (54) of an aircraft (90) and/or for stiffening the fuselage structure (54), the coupling device (2, 60) having:
a first coupling element (4, 62), and
a second coupling element (20, 68), which can be coupled to the first coupling element (4, 62),
wherein the first coupling element (4, 62) has an elongate body (16, 64), which has a first channel structure (32, 66) on a lateral surface along a first longitudinal axis (18),
wherein the second coupling element (20, 68) has a hollow-cylindrical portion (22, 70), which, on an inner face along a second longitudinal axis (28), has a second channel structure (34, 76) complementing the first channel structure (32, 66),
wherein the hollow-cylindrical portion (22, 70) has a radial cutout (26, 72) through which the elongate body (16, 64) can be inserted into the second channel structure (34, 76) from outside the hollow-cylindrical portion (22, 70) in a radial direction,
wherein the second coupling element (20, 68) has a closure body (36, 78), which is designed to close the radial cutout (26, 72), can be positioned removably in the cutout (26, 72) and completes the second channel structure (34, 76) on a radially internal face, and
wherein the second coupling element (20, 68) also has a securing element (46, 86), which can be pushed onto the hollow-cylindrical portion (22, 70) in order to secure the closure body (36, 78) on the hollow-cylindrical portion (22, 70).

2. Coupling device (2, 60) according to Claim 1,
wherein the first channel structure (32, 66) has an external thread (66), and
wherein the second channel structure (34, 76) has an internal thread (76).

3. Coupling device (2, 60) according to Claim 1,
wherein the first channel structure (32, 66) has an arrangement of multiple, spaced-apart, parallel channels around the circumference, and
wherein the second channel structure (34, 76) has an arrangement of multiple, spaced-apart, parallel grooves around the circumference.

4. Coupling device (2, 60) according to one of the preceding claims,
wherein the securing element (46, 86) comprises a sleeve, which is mounted on the second coupling element (20, 68) so as to be axially displaceable.

5. Coupling device (2, 60) according to Claim 4,
wherein the securing element (46, 86) comprises a compression spring (48), which urges the sleeve over the closure body (36, 78).

6. Coupling device (2, 60) according to Claim 4 or 5, further having a stop element (50, 88), which can be attached to the second coupling element (20, 68) and is designed to abut the securing element (46, 86) in a securing position.

7. Coupling device (2, 60) according to one of the preceding claims,
wherein the closure body (36, 78) can be plugged into the radial cutout (26, 72) in a form-fitting manner in a radial and/or axial direction.

8. Coupling device (2, 60) according to one of the preceding claims,
wherein the closure body (36, 78) comprises a ring portion (38), which can be plugged onto the elongate body (16, 64), and
wherein the ring portion (38) has a diameter which exceeds a diameter (d) of the elongate body (16, 64), with the result that at least one end, remote from the ring portion (38), of the closure body (36, 78) is movable in a radial direction in relation to the elongate body (16, 64), or with the result that the closure body (36, 78) is rotatable around the elongate body (16, 64).

9. Coupling device (2, 60) according to one of the preceding claims,
wherein the cutout (26, 72) extends over a segment or a sector of the hollow-cylindrical portion (22, 70).

10. Coupling device (2, 60) according to one of the preceding claims,
wherein the radial cutout (26, 72) has a first toothset (80),
wherein the closure body (36, 78) has a second toothset (82) which complements the first toothset (80), and
wherein teeth of the first toothset (80) and of the second toothset (82) are spaced apart along the first longitudinal axis (18) and second longitudinal axis (28), respectively.

11. Coupling device (2, 60) according to one of the preceding claims,
wherein the hollow-cylindrical portion (22, 70) has a radial viewing bore (84), which is arranged at a predefined distance from an end face of the second coupling element (20, 68) in order to check a minimum plug-in depth of the elongate body (16, 64) in the mounted state of the coupling device.

## Revendications

1. Dispositif d'accouplement (2, 60) pour une bielle de liaison (24) permettant de relier un composant à une structure de fuselage (54) d'un avion (90) et/ou de renforcer la structure de fuselage (54), le dispositif d'accouplement (2, 60) présentant :
un premier élément d'accouplement (4, 62), et
un deuxième élément d'accouplement (20, 68) pouvant être accouplé au premier élément d'accouplement (4, 62),
dans lequel le premier élément d'accouplement (4, 62) présente un corps allongé (16, 64) qui présente sur une surface latérale le long d'un premier axe longitudinal (18) une première structure rainurée (32, 66),
dans lequel le deuxième élément d'accouplement (20, 68) présente une partie cylindrique creuse (22, 70) qui présente sur une surface intérieure le long d'un deuxième axe longitudinal (28) une deuxième structure rainurée (34, 76) complémentaire à la première structure rainurée (32, 66),
dans lequel la partie cylindrique creuse (22, 70) présente une découpe radiale (26, 72) à travers laquelle le corps longitudinal (16, 64) peut être introduit dans la deuxième structure rainurée (34, 76) dans la direction radiale depuis l'extérieur de la partie cylindrique creuse (22, 70),
dans lequel le deuxième élément d'accouplement (20, 68) présente un corps de fermeture (36, 78) qui est réalisé pour fermer la découpe radiale (26, 72), peut être positionné de manière amovible dans la découpe (26, 72) et complète la deuxième structure rainurée (34, 76) au niveau d'une surface radialement interne, et
dans lequel le deuxième élément d'accouplement (20, 68) présente en outre un élément de blocage (46, 86) qui peut être poussé sur la partie cylindrique creuse (22, 70) pour bloquer le corps de fermeture (36, 78) sur la partie cylindrique creuse (22, 70).

2. Dispositif d'accouplement (2, 60) selon la revendication 1,
dans lequel la première structure rainurée (32, 66) présente un filetage mâle (66), et
dans lequel la deuxième structure rainurée (34, 76) présente un filetage femelle (76).

3. Dispositif d'accouplement (2, 60) selon la revendication 1,
dans lequel la première structure rainurée (32, 66) présente un agencement de plusieurs rainures périphériques parallèles, espacées les unes des autres, et
dans lequel la deuxième structure rainurée (34, 76) présente un agencement de plusieurs encoches périphériques parallèles, espacées les unes des autres.

4. Dispositif d'accouplement (2, 60) selon l'une quelconque des revendications précédentes,
dans lequel l'élément de blocage (46, 86) comprend une douille qui est montée de manière axialement mobile sur le deuxième élément d'accouplement (20, 68).

5. Dispositif d'accouplement (2, 60) selon la revendication 4,
dans lequel l'élément de blocage (46, 86) comprend un ressort de compression (48) qui force la douille sur le corps de fermeture (36, 78).

6. Dispositif d'accouplement (2, 60) selon la revendication 4 ou 5,
présentant en outre un élément de butée (50, 88) pouvant être rattaché au deuxième élément d'accouplement (20, 68) et qui est réalisé pour venir en butée contre l'élément de blocage (46, 86) dans une position de blocage.

7. Dispositif d'accouplement (2, 60) selon l'une quelconque des revendications précédentes,
dans lequel le corps de fermeture (36, 78) peut être inséré dans la découpe radiale (26, 72) par complémentarité de forme dans la direction radiale et/ou axiale.

8. Dispositif d'accouplement (2, 60) selon l'une quelconque des revendications précédentes,
dans lequel le corps de fermeture (36, 78) comprend une partie annulaire (38) qui peut être emmanchée sur le corps allongé (16, 64), et
dans lequel la partie annulaire (38) présente un diamètre qui dépasse un diamètre (d) du corps allongé (16, 64) de sorte qu'au moins une extrémité, détournée de la partie annulaire (38), du corps de fermeture (36, 78) peut être déplacée dans la direction radiale jusqu'au corps allongé (16, 64), ou de sorte que le corps de fermeture (36, 78) peut tourner autour du corps allongé (16, 64).

9. Dispositif d'accouplement (2, 60) selon l'une quelconque des revendications précédentes,
dans lequel la découpe (26, 72) s'étend sur un segment ou un secteur de la partie cylindrique creuse (22, 70).

10. Dispositif d'accouplement (2, 60) selon l'une quelconque des revendications précédentes,
dans lequel la découpe radiale (26, 72) présente une première denture (80),
dans lequel le corps de fermeture (36, 78) présente une deuxième denture (82) qui est complémentaire à la première denture (80), et
dans lequel les dents de la première denture (80) et de la deuxième denture (82) sont espacées les unes des autres le long d'un premier axe longitudinal (18) ou d'un deuxième axe longitudinal (28).

11. Dispositif d'accouplement (2, 60) selon l'une quelconque des revendications précédentes,
dans lequel la partie cylindrique creuse (22, 70) présente un trou de contrôle (84) qui est disposé à une distance prédéterminée par rapport à une extrémité frontale du deuxième élément d'accouplement (20, 68) pour vérifier une profondeur d'insertion minimale du corps allongé (16, 64) à l'état monté du dispositif d'accouplement.
